# EUROPEAN PATENT APPLICATION

(11) **EP 2 835 201 A1**
(43) Date of publication of application: **11.02.2015**
(21) Application number: 14160023.9
(22) Date of filing: 14.03.2014
(51) Int. Cl.: B23B 51/02, B23P 15/32

(54) **Bi-metal drill bit**

(30) Priority: 01.08.2013 US 201361860987 P
(71) Applicant: Black & Decker Inc., Newark, Delaware 19711 (US)
(72) Inventor: Santamarina, Aland, Columbia, MD Maryland 21044 (US); Steinbrunner, Glen V, Fallston, MD Maryland 21047 (US); Johnson, David N, Doncaster, South Yorkshire DN5 7EX (GB)
(74) Representative: Stentiford, Andrew Charles

(57) **Abstract**

A bi-metal drill bit (10) includes a body defining a cutting end (12) and a shank end (14). At least a portion of the cutting end (12) is formed of a first metal section (16) and at least a portion of the shank end (14) is formed of a second metal section (18) that is welded to the first metal section (16). The first metal section (16) has a first metal having a material hardness that is higher than a second material hardness of the second metal section. The first metal section (16) has a length to diameter ratio (L/D) between approximately 0.7 and approximately 3.0, or at least one of the first and second metal sections (16, 18) have been heat treated so as to have a recognizable different appearance than the other of the first and second sections (16, 18).

## Description

This application claims the benefit of U.S. Provisional Application No. 61/860987, filed on August 1, 2013, and is a Continuation-in-Part of U.S. Design Patent Application No. 29/449538, filed on March 15, 2013 and a Continuation-in-Part of U.S. Design Patent Application No. 29/468,347, filed on September 30, 2013. The entire disclosures of the above applications are incorporated herein by reference.

The present disclosure relates to a drill bit having a cutting end made of high speed steel and a shank end made of a softer steel.

This section provides background information related to the present disclosure which is not necessarily prior art.

Wood drill bits such as disclosed in US Patent No. 1,887,372 have been previously known to include a tip that is attached to a body, wherein the tip is formed of a hard metal alloy and the body is made from alloy steel, high-speed steel, high carbon steel, tool steel or the like. The separate elements are formed by casting, sintering moulding, or grinding and then they are secured together in working relation by brazing or welding. The bimetal cutting tool is known to take advantage of attaching the hard metal alloys to a softer metal body so as to reduce the cost associated with using hard metal alloys to form the entire tool. Although the general technology of bimetal drill bits is known, it is desirable in the art to provide an improved drill bit design and method of assembly that provides improved drilling and lifespan characteristics. In addition, it is desirable to provide a bimetal drill bit that is readily recognizable to a user as a metal drill bit having improved metal cutting capabilities as well as a longer life span.

This section provides a general summary of the disclosure, and is not a comprehensive disclosure of its full scope or all of its features.

In one aspect of the invention there is a drill bit, comprising a first rod-like section having a front cutting tip portion and a rear fluted portion, and composed of a first metal; and a second rod-like section having a front fluted portion and a rear shank portion, and composed of a different second metal, wherein the front fluted portion of the second section is welded to the rear fluted portion of the first section, the first section has a first material hardness that is higher than a second material hardness of the second section, and the first section has a length to diameter ratio between approximately 0.7 and approximately 3.0.

Surprisingly the inventors realised that certain configurations of a cheaper bi-metal drill actually increase the drilling performance and drilling life of the drill bit.

Preferably said first metal section of said body has a nominal diameter of 3/16" and a length to diameter ratio of at or between 1.3 and 3.0.

Preferably said first metal section of said body has a nominal diameter of 1/4" and a length to diameter ratio of at or between 1.0 and 2.3.

Preferably said first metal section of said body has a nominal diameter of 3/8" and a length to diameter ratio of at or between 0.8 and 1.8.

Preferably said first metal section of said body has a nominal diameter of 1/2" and a length to diameter ratio of at or between 0.7 and 1.5.

Preferably the hardness of the first metal is at least approximately 65 HRc.

Preferably the hardness of the second metal is approximately 40-56 HRc.

Preferably at least one of said first and second metal sections is heat treated so as to have a recognizable different appearance than the other of said first and second metal sections.

Preferably said one of said first and second metal sections has one of a gold, yellow, bronze, copper, silver, gray or bare metal appearance and said other of said first and second metal sections has one of a contrasting black, dark blue, dark purple, yellow, gold or copper colour appearance.

Preferably the drill bit is capable of drilling at least approximately 700 holes through approximately 6 mm thick 1018 mild steel using a hand-held drill, or an experimental simulation thereof, operating at approximately 1200 rpm with a constant bias of a approximately 23 kg, each hole being drilled in less than approximately 90 seconds.

In a second aspect of the invention there is a drill bit, comprising a first rod-like section having a front cutting tip portion and a rear fluted portion, and composed of a first metal; and a second rod-like section having a front fluted portion and a rear shank portion, and composed of a different second metal, wherein the front fluted portion of the second section is welded to the rear fluted portion of the first section, the first section has a first material hardness that is higher than a second material hardness of the second section, and at least one of the first and second sections have been heat treated so as to have a recognizable different appearance than the other of the first and second sections.

In a third aspect of the invention there is a method of making a drill bit, comprising providing a first rod composed of a first metal and a second rod composed of a different second metal; heat treating at least one of the first rod and the second rod to so that the first rod has a greater material hardness and a different visual appearance than the second rod; welding the first rod to the second rod to form a welded rod having a first section composed of the first rod and a second section composed of the second rod; forming a cutting tip and cutting flutes in the welded rod with the cutting tip and a first portion of the flutes formed in the first section and a second portion of the flutes formed in the second section.

The present disclosure provides a bi-metal drill bit including a body defining a cutting end and a shank end. At least a portion of the cutting end is formed of a first metal section and at least a portion of the shank end is formed of a second metal section that is welded to the first metal section. The first metal section has a first metal having a material hardness that is higher than a second material hardness of the second metal section. One of the first and second metal sections is treated either by coating or heat treating so as to have a recognizable different appearance than the other of the first and second metal sections. This treatment allows a user to readily recognize that the drill bit is a bi-metal drill bit having improved cutting characteristics due to the hardened cutting end and improved lifespan due to the softer metal body.

The bi-metal drill bit is designed for drilling through sheet-metal and the first metal section is formed from a high-speed steel, e.g., M42 (8% cobalt), M35 (5% cobalt), or M2. The first metal section preferably has an HRc hardness of at least approximately 65 HRc, for example an HRc in the high 60s. This type of steal is more expensive, more brittle, and has a higher electrical resistance than ordinary steel. The second metal section is made from ordinary tool steel, such as 65 Mn steel. This is a softer material with an HRc hardness between approximately 40-50 HRc. This steel is less expensive and more electrically conductive than the high-speed steel used in the first metal section. The length to diameter ratio of the first metal section has been optimized to provide good cutting action for sheet-metal having a thickness of 1/4 inch or less. The lengths of the first metal section and the second metal section have been optimized: (1) to allow the first metal section to be able to be held by a welding machine during welding; (2) to allow passage of sufficient current through the first metal section for good electrical resistance welding; (3) to provide better life of the drill bit; (4) to provide better bending toughness in the second metal portion after the first metal section breaks through the sheet-metal; and (5) to minimize the cost of the components of the drill bit.

Further areas of applicability will become apparent from the description provided herein. The description and specific examples in this summary are intended for purposes of illustration only and are not intended to limit the scope of the present disclosure.

The drawings described herein are for illustrative purposes only of selected embodiments and not all possible implementations, and are not intended to limit the scope of the present disclosure.
FIG. 1 is a perspective view of a first embodiment of a bi-metal drill bit according to the principles of the present disclosure;
FIG. 2 is a perspective view of first and second metal blanks for forming the sections of a bi-metal drill bit according to the principles of the present disclosure;
FIG. 3 is a perspective view of a bi-metal welded blank formed using the first and second metal blanks shown in Fig. 2;
FIG. 4 is a perspective view of a second embodiment of a bi-metal drill bit;
FIG. 5 is a perspective view of a third embodiment of a bi-metal drill bit;
FIG. 6 is a perspective view of a fourth embodiment of a bi-metal drill bit; and
FIG. 7 is a schematic view of a drill with a bi-metal drill bit according to the present invention for illustrating a potential location of failure of the drill bit.

Corresponding reference numerals indicate corresponding parts throughout the several views of the drawings.

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

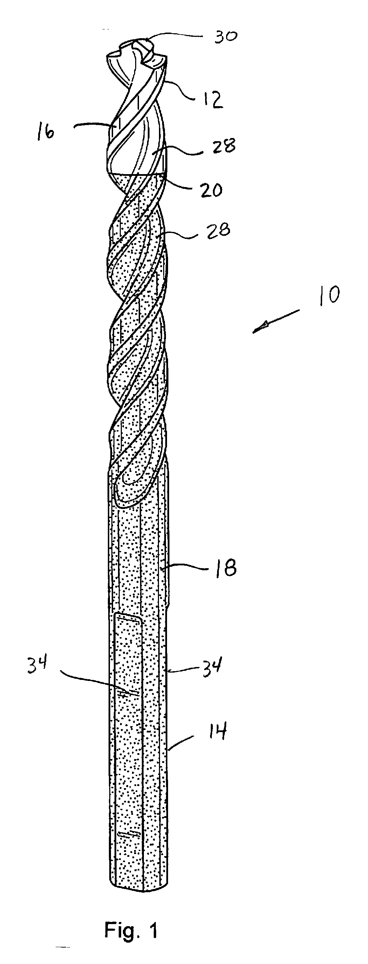

With reference to Figure 1, a bi-metal drill bit 10 according to the principles of the present disclosure is shown that defines a cutting end 12 and a shank end 14. At least a portion of the cutting end 12 is formed of a first metal section 16 and at least a portion of the shank end 14 is formed of a second metal section 18 that is welded to the first metal section 16 at the joining location 20.

The first metal section 16 is formed from a high-speed steel, e.g. M42 (8% cobalt), M35 (5% cobalt), or M2. The first metal section 16 is a hard material that is good at cutting metal, with an HRc hardness in the high 60s (e.g., at least 65 HRc). This type of steel is more expensive, more brittle, and has a higher electrical resistance than ordinary tool steel.

The second metal section 18 is made from an ordinary tool steel such as 65 Mn steel. This is a softer material with an HRc hardness in the 40s to low 50s (e.g., approximately 40 HRc to approximately 56 HRc). It is less expensive and more electrically conductive than the high-speed steel used for the first metal section 16.

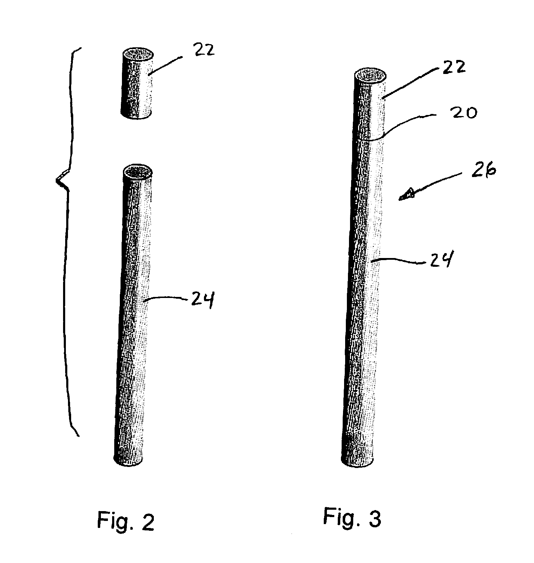

With reference to Figs. 2 and 3, the bi-metal drill bit 10 is formed from a first rod-shaped or rod-like blank 22 that is made of the first metal and a second rod-shaped or rod-like blank 24 that is formed of the second metal. The two rods 22, 24 can be heat treated separately, and then welded together using electric resistance welding. It is noted that the length of the first metal blank 22 has to be sufficient to be inserted into the resistance welding device. After the first blank 22 and the second blank 24 are welded together to form a welded blank 26 with the welded joining location 20, the drill bit 10 is then formed by cutting the threads 28 and tip 30 in the welded rod 26. The first metal section 16 includes the tip 30 and a rear fluted portion while the second metal section 18 includes a front fluted portion and a rear shank portion. The front fluted portion of the second metal section 18 is welded to the rear fluted portion of the first metal section 16.

The threads 28 have a length that extends along the length of the first metal section 16 and along a portion of the second metal section 18. Preferably, the threads 28 extend along the second metal section 18 a distance that is greater than a length of the first metal section 16.

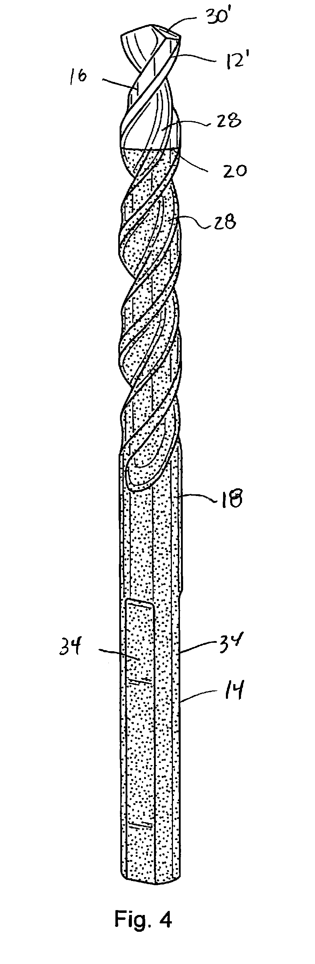

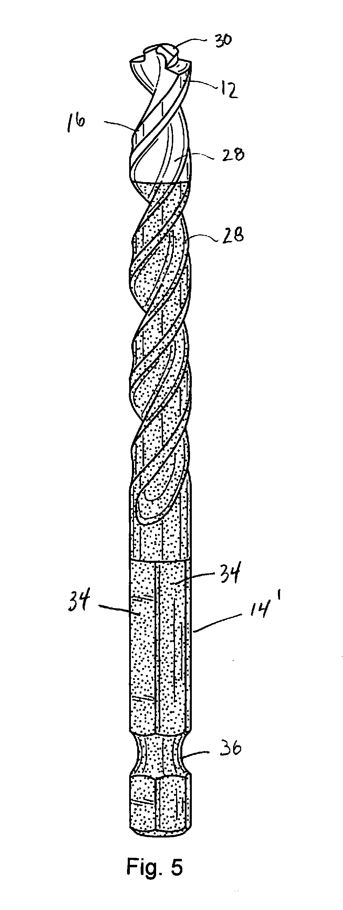

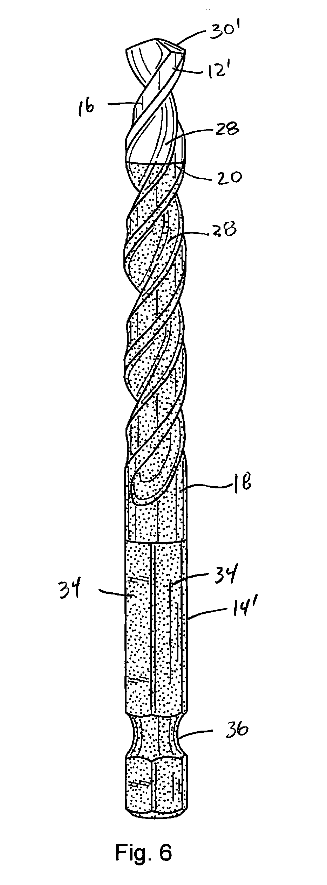

The tip 30 has cutting edges, and can have a number of possible configurations, e.g., a self-centring tip (pilot point), as illustrated in Figs. 1 and 5, a split point tip 30', as illustrated in Figs. 4 and 6, or other known drilling tip configurations. The shank portion 14 can have a number of different possible configurations. For example, the shank portion 14 may be shaped to include none, one, or more flats 34 and/or can include a ball groove 36 (as shown in Figs. 5 and 6). In other embodiments, the shank portion can have another shape that is conducive to insertion in a chuck device or tool holder of a drill, driver, or other power tool.

As shown in Figure 1, one or both of the first and second metal sections 16, 18 can be heat treated to provide the first and second metal sections with colour differentiation therebetween. The heat treating may (but is not required to) include an oxide heat treatment, for example, a black oxide or gold oxide heat treatment. As the first and second metal sections 16, 18 are made from different metals, the metals react differently to the heat treatment to provide a colour differentiation therebetween. Although not intended to be limiting by this example, one implementation can include the first metal section 16 having a gold, yellow, bronze, copper, silver, gray or bare metal appearance while the second metal section 18 can have a contrasting black, dark blue, dark purple, yellow, gold, or copper colour appearance. The contrasting colours of the first metal section 16 and second metal section 18 are indicative to a user that the drill bit is a bimetal drill bit that has superior drilling capabilities due to the hardened metal tip section as well as long lifespan properties due to the reduced hardness body section. As an alternative, one or both sections 16, 18 can be coated or otherwise treated to give the colour differentiation that is desired.

One benefit of the bi-metal drill bit 10 includes lowering the cost. Surprisingly the inventors realised that certain configurations of a cheaper bi-metal drill actually increase the drilling performance and drilling life of the drill bit. The drill bit 10 extends the drilling life, reduces the cost and improves the manufacturability. It is realised that the high speed steel tip improves the drilling life while the fluted/threaded region improves the durability to resist breaking within the shank and fluted region.

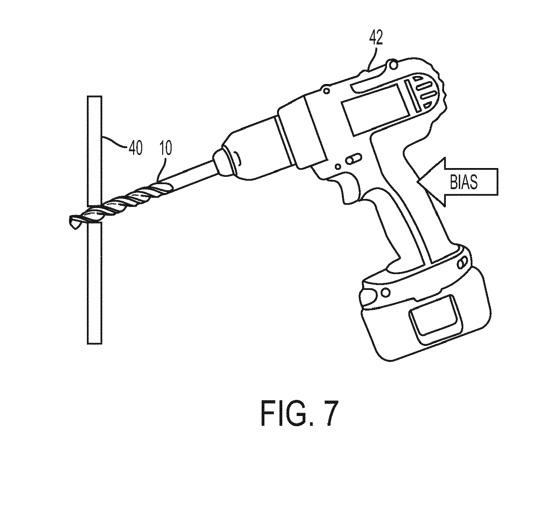

Premium drill bits tend to be composed of hard metal alloys, such as a high-speed steel (HSS) material. The hard metal alloy material is harder and provides faster and cleaner cutting at the cutting edges at the tip, than less expensive drill bits that are made of ordinary steel. A drawback of hard metal alloy drill bits is its relatively low toughness as compared with ordinary steel, particularly in the fluted region behind the front cutting edges. Toughness is defined as the ability of a material to absorb energy without failure. Current hard metal alloy drill bits are susceptible to failure in the fluted region when submitted to an impact load because the material also tends to be quite brittle. A typical case of impact loading happens during drilling a relatively thin material (such as ¼ or less steel plate or sheet metal 40); at the moment when the drill bit 10 breaks through the plate 40, there is the potential of a sudden side load if the bit 10 is not perfectly perpendicular to the plate 40 (see Fig. 7). This condition, although exaggerated in Fig. 7 for the purpose of describing the condition, occurs often in real world usage because the tool 42 is hand-held.

The proposed bi-metal drill bit 10 as described above addresses the weakness of a drill bit composed solely of a hard metal alloy by replacing much of the fluted region with a much tougher and less expensive material. This material 18 has properties that are compatible for welding to the hard metal alloy tip 16, but additionally must have good toughness properties.

The length to diameter ratio of the first hard metal alloy section 16 has been optimized to provide good cutting action in sheet-metal having a thickness of 1/4 inch or less, while allowing passage of sufficient current through the front section 16 for good electric resistance welding, and also being short enough to minimize cost and provide better overall strength and life in the fluted rear section 18 after the cutting tip breaks through the sheet-metal. To minimize cost, the volume of hard metal alloy being used has been minimized. For optimizing manufacturability of the first metal section 16 and life of the drill bit, one key factor is the length/diameter ratio (L/D) of the first metal section 16. For example, a typical propulsion method to move material in an automated feed device used in high speed (e.g., about one weld every five seconds) mass production is to use a vibration feed machine to supply the first rod-shaped blank 22 to the resistance weld machine. It has been discovered that an L/D ratio of the first metal section of at least 0.7 is desired for vibratory systems to be able to properly orient the first rod-shaped blank 22 for the welding machine.

Other factors that impact the final length of the first rod-shaped blank 22 also include: the tip design (e.g., self-centring, split point, etc.), the size of heat affected zone (HAZ) due to electric resistance welding, the size of the degradation zone at electrode contact area during resistance welding, and the minimum length of high speed steel material between HAZ and the cutting edge (also known as edge thickness).

A first metal section 16 having a length to diameter ratio between approximately 0.7 and approximately 3.0 is particularly advantageous. The combination of this length to diameter ratio used together with the second section improves the life time of the drill bit. It is thought that this length to diameter ratio of the first metal provides flexibility to the drill bit. At the same time the second section can provide a harder tip section.

Table 1 shows the entire drilling range and the minimum first metal section (TIP) 16 lengths required for self-centring type bi-metal drill bits. Table 1 also shows the upper limit of the first metal section (TIP) 16 length to confidently build production equipment that meets the fast cycle times required for such a high volume product. As can be seen from the table, a minimum to maximum length to diameter ratio (L/D) of the first rod-shaped blank 22 (referred to as TIP) can range from 0.7 to 3.0 while the specific range is detailed in Table 1 for each size of bi-metal drill bit. By way of example, for a 3/16" drill bit, the minimum to maximum L/D ratio is from 1.3 to 3; for a ¼" drill bit, the minimum to maximum L/D ratio is from 1.0 to 2.3; and for a ½" drill bit, the minimum to maximum L/D ratio is from 0.7 to 1.5. The drill bits were seen to have improved lifetime at the aforementioned L/D ratios. Although Table 1 ranges from 3/16" to ½" drill bits, other larger and smaller bi-metal drill bits can also be used.

**Table 1. TIP lengths for the entire range of sizes. Additional, cost increase incurred if the TIP length grows from MIN to MAX.**

| Nominal OD | blank diameter | PP height | MIN Length of TIP based on manufacturabilty reqs | MIN L/D for PP | MAX Length of TIP based on manufacturabilty reqs | MAX L/D for PP | raw material cost increase |
|---|---|---|---|---|---|---|---|
| | (mm) | (mm) | (mm) | | (mm) | | % |
| 3/16" | 5.02 | 1.53 | 6.53 | 1.3 | 15 | 3.0 | 83% |
| 13/64" | 5.41 | 1.55 | 6.55 | 1.2 | 15 | 2.8 | 87% |
| 7/32" | 5.81 | 1.67 | 6.67 | 1.1 | 15 | 2.6 | 88% |
| 15/64" | 6.21 | 1.81 | 6.81 | 1.1 | 15 | 2.4 | 89% |
| 1/4" | 6.60 | 1.91 | 6.91 | 1.0 | 15 | 2.3 | 89% |
| 17/64" | 7.00 | 2.04 | 7.04 | 1.0 | 15.3 | 2.2 | 92% |
| 9/32" | 7.40 | 2.19 | 7.19 | 1.0 | 15.6 | 2.1 | 95% |
| 19/64" | 7.79 | 2.32 | 7.32 | 0.9 | 15.9 | 2.0 | 97% |
| 5/16" | 8.19 | 2.42 | 7.42 | 0.9 | 16.2 | 2.0 | 100% |
| 21/64" | 8.59 | 2.59 | 7.59 | 0.9 | 16.5 | 1.9 | 101% |
| 11/32" | 8.99 | 2.72 | 7.72 | 0.9 | 16.9 | 1.9 | 103% |
| 23/64" | 9.38 | 2.85 | 7.85 | 0.8 | 17.2 | 1.8 | 105% |
| 3/8" | 9.78 | 2.97 | 7.97 | 0.8 | 17.5 | 1.8 | 107% |
| 25/64" | 10.18 | 3.11 | 8.11 | 0.8 | 17.8 | 1.7 | 108% |
| 13/32" | 10.57 | 3.23 | 8.23 | 0.8 | 18.1 | 1.7 | 109% |
| 27/64" | 10.97 | 3.35 | 8.35 | 0.8 | 18.5 | 1.7 | 111% |
| 7/16" | 11.37 | 3.47 | 8.47 | 0.7 | 18.8 | 1.7 | 112% |
| 29/64" | 11.76 | 3.59 | 8.59 | 0.7 | 19.1 | 1.6 | 113% |
| 15/32" | 12.16 | 3.72 | 8.72 | 0.7 | 19.4 | 1.6 | 114% |
| 31/64" | 12.56 | 3.85 | 8.85 | 0.7 | 19.7 | 1.6 | 115% |
| 1/2" | 12.95 | 3.97 | 8.97 | 0.7 | 20 | 1.5 | 116% |
| | | | | | | | |
| **Assumptions** | | | | | | | |
| pilot point | | | | | | | |
| HAZ height = | | | 2.5 | | | | |
| degradation zone at electrode contact = | | | 0.5 | | | | |
| edge thickness = | | | 2.0 | | | | |

Table 2 is similar to Table 1 but includes data for a split point-type (SP) bi-metal drill bit as compared to the self-centring bi-metal drill bit in Table 1.

**Table 2. TIP lengths for the entire range of sizes. Additional, cost increase incurred if the TIP length grows from MIN to MAX.**

| Nominal OD | blank diameter | SP height | MIN length of TIP based on manufacturabilty reqs | MIN L/D for SP | MAX Length of TIP based on manufacturabilty reqs | MAX L/D for SP | raw material cost increase |
|---|---|---|---|---|---|---|---|
| | (mm) | (mm) | (mm) | | (mm) | | % |
| 3/16" | 5.02 | 1.04 | 6.04 | 1.2 | 15 | 3.0 | 92% |
| 13/64" | 5.41 | 1.12 | 6.12 | 1.1 | 15 | 2.8 | 95% |
| 7/32" | 5.81 | 1.20 | 6.20 | 1.1 | 15 | 2.6 | 98% |
| 15/64" | 6.21 | 1.29 | 6.29 | 1.0 | 15 | 2.4 | 100% |
| 1/4" | 6.60 | 1.37 | 6.37 | 1.0 | 15 | 2.3 | 102% |
| 17/64" | 7.00 | 1.45 | 6.45 | 0.9 | 15.3 | 2.2 | 106% |
| 9/32" | 7.40 | 1.53 | 6.53 | 0.9 | 15.6 | 2.1 | 110% |
| 19/64" | 7.79 | 1 61 | 6.61 | 0.8 | 15 9 | 2.0 | 114% |
| 5/16" | 8.19 | 1.70 | 6.70 | 0.8 | 16.2 | 2.0 | 118% |
| 21/64" | 8.59 | 1.78 | 6.78 | 0.8 | 16.5 | 1.9 | 121% |
| 11/32" | 8.99 | 1.86 | 6.86 | 0.8 | 16 9 | 1.9 | 125% |
| 23/64" | 9.38 | 1.94 | 6.94 | 0.7 | 17.2 | 1.8 | 128% |
| 3/8" | 9.78 | 2.03 | 7.03 | 0.7 | 17.5 | 1.8 | 131% |
| 25/64" | 10.18 | 2.11 | 7.11 | 0.7 | 17.8 | 1.7 | 134% |
| 13/32" | 10.57 | 2.30 | 7.30 | 0.7 | 18.1 | 1.7 | 133% |
| 27/64" | 10.97 | 2.60 | 7.60 | 0.7 | 18.5 | 1.7 | 130% |
| 7/16" | 11.37 | 2.90 | 7.90 | 0.7 | 18.8 | 1.7 | 126% |
| 29/64" | 11.76 | 3.20 | 8.20 | 0.7 | 19.1 | 1.6 | 123% |
| 15/32" | 12.16 | 3.50 | 8.50 | 0.7 | 19.4 | 1.6 | 119% |
| 31/64" | 12.56 | 3.80 | 8.80 | 0.7 | 19.7 | 1.6 | 116% |
| 1/2" | 12.95 | 4.00 | 9.00 | 0.7 | 20 | 1.5 | 115% |
| | | | | | | | |
| **Assumptions** | | | | | | | |
| split point | | | | | | | |
| HAZ height = | | | 2.5 | | | | |
| degradation zone at electrode contact = | | | 0.5 | | | | |
| edge thickness = | | | 2.0 | | | | |

Table 3, below illustrates the improved performance of a bi-metal drill bit according to the principles of the present disclosure wherein the number of holes drilled by the bi-metal drill bit significantly exceeds the performance of commercially available metal cutting drill bits by several hundred drilled holes. The tests performed in Table 3 were performed using six 1/4" drill bits of each sample that were tested according to a hand-held drilling simulation test. When a user drills a hole in a workpiece using a hand-held drill, as the drill bit becomes dull, the user will determine that the drill bit is worn out after it does not cut a hole in a reasonable amount of time. Accordingly, a test rig was utilized to life test drill bits. A DeWalt® DW165 corded drill rotating at 1200 rpm with no load was utilized in the rig. Generally, the test material or workpiece was a 6 mm thick1018 mild steel. The low constant bias or force of about 23 kg (51 lbs) was applied onto the drill with a ¼" diameter drill bit. Acceptable hole drill times are under approximately 90 seconds. Above approximately 90 seconds, the user believes the drill bit is worn out. Accordingly, the drill bit is said, to have reached the end of its life when the drill bit breaks or when the time for drilling the holes exceeds 90 seconds, whichever comes first. The block sections of each graphed item represents the middle 33% of the test results while the upper and lower lines represent the upper and lower 33% of the test results for the sample set. The sample bi-metal drill bits (labelled BBW Bi-metal 1 and BBW Bi-metal 2) were each made from an M42 first blank 22 and a 65 Mn second metal blank 24. The welding process for the samples BBW Bi-metal 1 and BBW Bi-metal 2 were each performed by two different suppliers thus leading to the difference in test results for the two samples. Nonetheless, both of the bi-metal drill bit samples (BBW Bi-metal 1 and BBW Bi-metal 2) had a median performance that out-performed the median performance of all of the other samples by over 200 holes drilled. For example, the BBW Bi-Metal 1 sample had an average life of approximately 700 holes, and the BBW Bi-Metal 2 sample had an average life of approximately 1300 holes.

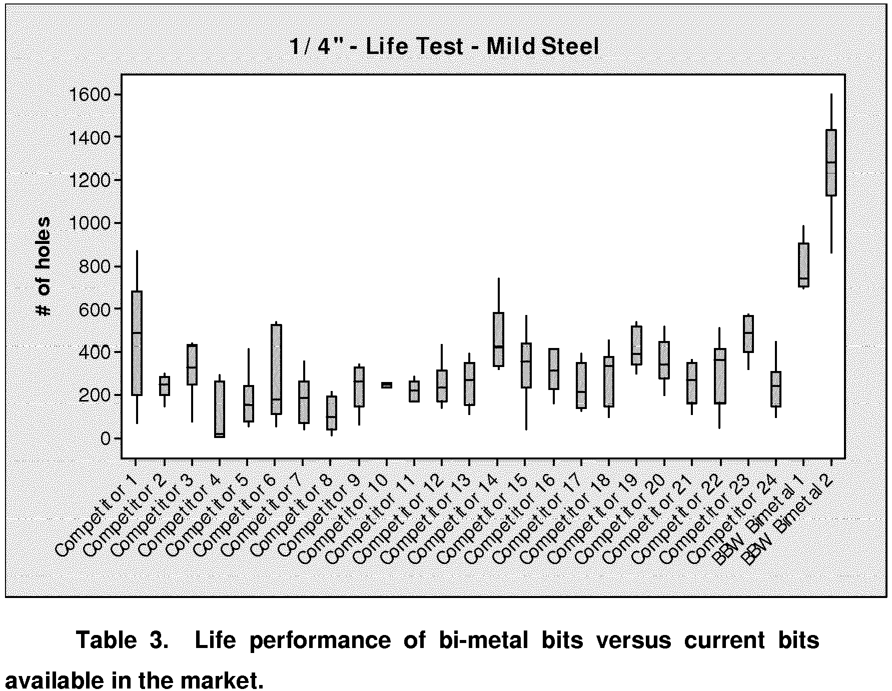

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A drill bit, comprising:
a first rod-like section having a front cutting tip portion and a rear fluted portion, and composed of a first metal; and
a second rod-like section having a front fluted portion and a rear shank portion, and composed of a different second metal,
wherein the front fluted portion of the second section is welded to the rear fluted portion of the first section, the first section has a first material hardness that is higher than a second material hardness of the second section, and the first section has a length to diameter ratio between approximately 0.7 and approximately 3.0.

2. The drill bit according to claim 1, wherein said first metal section of said body has a nominal diameter of 3/16" and a length to diameter ratio of at or between 1.3 and 3.0.

3. The drill bit according to claims 1 or 2, wherein said first metal section of said body has a nominal diameter of 1/4" and a length to diameter ratio of at or between 1.0 and 2.3.

4. The drill bit according to claims 1 to 3, wherein said first metal section of said body has a nominal diameter of 3/8" and a length to diameter ratio of at or between 0.8 and 1.8.

5. The drill bit according to claims 1 to 4, wherein said first metal section of said body has a nominal diameter of 1/2" and a length to diameter ratio of at or between 0.7 and 1.5.

6. The drill bit according to claims 1 to 5, wherein the hardness of the first metal is at least approximately 65 HRc, and preferably wherein the hardness of the second metal is approximately 40-56 HRc.

7. The drill bit according to claims 1 to 6, wherein at least one of said first and second metal sections is heat treated so as to have a recognizable different appearance than the other of said first and second metal sections.

8. The drill bit according to claims 1 to 7, wherein the drill bit is capable of drilling at least approximately 700 holes through approximately 6 mm thick 1018 mild steel using a hand-held drill, or an experimental simulation thereof, operating at approximately 1200 rpm with a constant bias of a approximately 23 kg, each hole being drilled in less than approximately 90 seconds.

9. A drill bit, comprising:
a first rod-like section having a front cutting tip portion and a rear fluted portion, and composed of a first metal; and
a second rod-like section having a front fluted portion and a rear shank portion, and composed of a different second metal,
wherein the front fluted portion of the second section is welded to the rear fluted portion of the first section, the first section has a first material hardness that is higher than a second material hardness of the second section, and at least one of the first and second sections have been heat treated so as to have a recognizable different appearance than the other of the first and second sections.

10. The drill bit according to claim 9, wherein the hardness of the first metal is at least approximately 65 HRc, and preferably wherein the hardness of the second metal is approximately 40-50 HRc.

11. The drill bit according to claims 9 to 10, wherein the drill bit is capable of drilling at least approximately 700 holes through approximately 6 mm thick 1018 mild steel using a hand-held drill, or an experimental simulation thereof, operating at approximately 1200 rpm with a constant bias of a approximately 23 kg, each hole being drilled in less than approximately 90 seconds.

12. A method of making a drill bit, comprising:
providing a first rod composed of a first metal and a second rod composed of a different second metal;
heat treating at least one of the first rod and the second rod to so that the first rod has a greater material hardness and a different visual appearance than the second rod;
welding the first rod to the second rod to form a welded rod having a first section composed of the first rod and a second section composed of the second rod;
forming a cutting tip and cutting flutes in the welded rod with the cutting tip and a first portion of the flutes formed in the first section and a second portion of the flutes formed in the second section.

13. The method according to claim 12, wherein the hardness of the first metal is at least approximately 65 HRc.

14. The method according to claims 12 or 13, wherein the hardness of the second metal is approximately 40-50 HRc.

15. The method according to claims 12 to 14, wherein a length to diameter ratio of the first metal blank is at or between 0.7 and 3.0.
